# EUROPEAN PATENT APPLICATION

(11) **EP 4 495 056 A2**
(43) Date of publication of application: **22.01.2025**
(21) Application number: 24187548.3
(22) Date of filing: 09.07.2024
(51) Int. Cl.: C01B 3/04

(54) **HYDROGEN CRACKING APPARATUS, HYDROGEN CRACKING METHOD USING THE SAME AND ENERGY GENERATION SYSTEM**

(30) Priority: 21.07.2023 KR 20230095531
(71) Applicant: SK Innovation Co., Ltd., Seoul 03188 (KR)
(72) Inventor: PARK, Chan Saem, 34124 Daejeon (KR); KIM, Jae Jeong, 34124 Daejeon (KR); BAE, Sun Hyuk, 34124 Daejeon (KR)
(74) Representative: Prüfer & Partner mbB Patentanwälte · Rechtsanwälte

(57) **Abstract**

A hydrogen cracking apparatus includes a driver operated by a power supplied from a battery, a reactor that decomposes ammonia to generate hydrogen, a heater for heating the reactor, a fuel cell reacting hydrogen to generate power and supply at least part of the generated power to the battery, a sensor measuring internal temperature information of the reactor, and a controller receiving the internal temperature information transmitted by the sensor. The controller is configured to receive power consumption information of the battery, and to control an operation of the heater by comparing an expected power consumption expected when driving the heater and an expected temperature increase value expected when driving the reactor.

## Description

### TECHNICAL FIELD

Embodiments of the present disclosure relate generally to a hydrogen cracking apparatus, a hydrogen cracking method using the same and an energy generation system.

### BACKGROUND

In a variable operation of a decomposition amount of ammonia based on a condition of a driving vehicle, a supplied amount of ammonia may be controlled differently depending on a temperature of a reactor so that an ammonia decomposition ratio in the reactor can be stabilized due to a change in a temperature of the reactor.

In the load follow operation process, when the supply of ammonia into the reactor is increased in order to increase a hydrogen production within a short period, a temperature reduction in the reactor may be caused because the supplied ammonia is normally at room temperature. That is, a degree of a temperature drop may be determined according to a flow rate of ammonia.

When an internal temperature of the reactor is temporarily lowered, the ammonia decomposition ratio may be decreased, which may cause a catalyst deactivation within an inside of the reactor or performance degradation of an entire apparatus. Accordingly, an amount of a residual ammonia in the apparatus may be increased. The residual ammonia may be supplied to an adsorption tower or a fuel cell, thereby causing overall performance degradation or unexpected defects of the apparatus.

### SUMMARY

According to an embodiment of the present disclosure, there is provided a hydrogen cracking apparatus having improved thermal efficiency.

According to an embodiment of the present disclosure, there is provided a hydrogen cracking method having improved thermal efficiency.

According to an embodiment of the present disclosure, there is provided an energy generation system having improved thermal efficiency.

The embodiments of the present disclosure are not specifically limited, and other embodiments that are not clearly mentioned will also be understood by those skilled in the art from the following descriptions.

A hydrogen cracking apparatus includes a driver operated by a power supplied from a battery, a reactor that decomposes ammonia to generate hydrogen, a heater for heating the reactor, a fuel cell reacting hydrogen to generate power and supply at least part of the generated power to the battery, a sensor measuring internal temperature information of the reactor, and a controller receiving the internal temperature information transmitted by the sensor. A controller is configured to receive power consumption information of the battery, and to control an operation of the heater by comparing an expected power consumption expected when driving the heater (i.e., the controller is controlling the operation of the heater) and an expected temperature increase value expected when driving the reactor (i.e., when the heater is controlling the operation of the reactor).

In some embodiments, the controller may be configured to provide a portion of the power in the battery to the heater, and to control an operation of the heater based on power consumption information of the battery and the temperature information.

In some embodiments, the heater may include at least one pipe, and the controller may be configured to control an operation of the heater including the at least one pipe based on the temperature information.

In some embodiments, the reactor may include a flow-meter that senses an amount of ammonia injected into the reactor. The controller may be configured to receive ammonia injection amount information and ammonia injection time information from the flow-meter, calculate an injection rate of ammonia based on the ammonia injection amount information and the ammonia injection time information, and calculate the expected temperature increase value based on the injection rate of ammonia.

In some embodiments, the controller may calculate an injection acceleration of ammonia based on the injection rate of ammonia, and may determine to drive the heater when the injection acceleration of ammonia is greater than or equal to a preset acceleration.

In some embodiments, the heater may include at least one structure of a straight pipe structure penetrating an inside of the reactor, a spiral pipe structure penetrating the inside of the reactor, and a spiral pipe structure surrounding an outside of the reactor.

In some embodiments, the hydrogen cracking apparatus may further include an ammonia injector for injecting ammonia into the reactor. The heater may be disposed adjacent to the ammonia injector and may be configured to heat ammonia before being injected into the reactor.

In some embodiments, the heater may be adjacent to the battery, and the controller may calculate by using a portion of a power consumption of the battery as the expected power consumption expected when driving the heater.

In some embodiments, the hydrogen cracking apparatus may further include a thermal insulation device surrounding an outside of the reactor with a thermal insulation material.

In a hydrogen cracking method, temperature information collected from a sensor that measures an internal temperature of a reactor for decomposing ammonia to generate hydrogen is received. A power consumption information of a battery is received. An operation of a heater may be controlled by comparing an expected power consumption expected when driving the heater and an expected temperature increase value expected when driving the reactor.

An energy generation system includes a reactor that produces hydrogen by decomposing an ammonia feed, a fuel cell configured to use the hydrogen to generate power, a battery for storing the generated power, a heater for heating the reactor. and a temperature control system configured to control an internal temperature of the reactor by controlling an operation of the heater. The heater and the temperature control system use power supplied by the battery.

According to the above-described embodiments of the present disclosure, a temperature in a reactor may be rapidly increased using the hydrogen cracking apparatus. For example, a shape or an arrangement of a heater may be modified in various forms to implement a temperature control.

In some embodiments, an outside of the reactor may be wrapped with a thermal insulation device, or ammonia supplied into the reactor may be pre-heated. In some embodiments, a power consumed by a battery or a heat generated by the battery may be utilized. Accordingly, a temperature drop at an inside of the reactor may be prevented.

The effects of the embodiments of the present disclosure are not limited to those mentioned above, and other effects that are not specifically mentioned will be clearly understood by those skilled in the art from the following descriptions.

### BRIEF DESCRIPTION OF THE DRAWINGS

FIG. 1 is a simplified block diagram of a hydrogen cracking apparatus in accordance with some embodiments of the present disclosure.
FIG. 2 is a schematic block diagram illustrating components of a hydrogen cracking apparatus in accordance with some embodiments of the present disclosure.
FIG. 3 is a schematic flowchart of a hydrogen cracking method in accordance with some embodiments of the present disclosure.
FIG. 4 is a schematic flowchart for describing driving a heater in a hydrogen cracking method in accordance with some embodiments of the present disclosure.
FIGS. 5A to 5C are schematic block diagrams illustrating a heater and a thermal insulation device of a hydrogen cracking apparatus in accordance with some embodiments of the present disclosure.
FIG. 6 is a schematic flowchart for describing a battery power utilization in a hydrogen cracking apparatus in accordance with some embodiments of the present disclosure.

### DETAILED DESCRIPTION

Throughout the present disclosure, the same reference numerals refer to the same elements. The present disclosure does not describe all elements of the embodiments, and general contents in the technical field to which the present disclosure pertains or repeated contents between embodiments can be omitted. The term "part, module, member, block, etc." used herein may be implemented by software or hardware, and according to embodiments, a plurality of the '"part, module, member, block, etc." may be implemented as a single element, or a single "part, module, member, block, etc." may include a plurality of elements.

Throughout the specification, when a feature, or a portion, or a component of a feature is recited as being "connected" to another feature, or another portion, or another component of the same feature or of another feature, the recitation is intended to include both direct and indirect connections. Indirect connections may include one or more wireless communication networks.

When an element is recited to "include" another element, the elements may include other elements, rather than excluding other elements, unless otherwise described.

Throughout the specification, when a member is recited to be positioned "on" another member, the recitation includes a case where a member is in contact with another member, and a case where another member is present between the two members.

Terms such as "a first, a second, etc." are used to distinguish one element from another element, and the elements are not limited by the terms.

As used herein, the singular forms "a," "an" and "the" are intended to include the plural forms as well, unless the context clearly indicates otherwise.

A reference numeral designating each operation code is used for convenience of descriptions, and is not intended to limit the order of each operation, and each operation may be performed differently from the specified order unless a specific order is clearly described herein.

Hereinafter, operation mechanisms and embodiments of the present disclosure will be described with reference to the accompanying drawings.

In the present specification, "a device (or an apparatus) according to the present disclosure" includes all various devices capable of performing arithmetic processing and providing a result to a user. For example, the device according to the present disclosure may include all of a computer, a server device and a portable terminal, or may include any one of the forms.

Here, the computer may include, e.g., a notebook computer, a desktop, a laptop computer, a tablet PC, a slate PC (e.g., a tablet), etc., equipped with a web browser.

The server device is a server that processes information by communicating with an external device, and may include an application server, a computing server, a database server, a file server, a game server, a mail server, a proxy server, a web server, etc.

For example, the portable terminal may be a wireless communication device having portability and mobility. The portable terminal may include all types of handheld-based wireless communication devices such as a personal communication system (PCS), a global system for mobile communications (GSM), a personal digital cell (PDC), a personal handyphone system (PHS), a personal digital assistant (PDA), an International Mobile Telecommunication (IMT)-2000, Code Division Multiple Access (CDMA)-2000, W-CDMA (W-Code Division Multiple Access), a wireless broadband Internet (WiBro) terminal, a smartphone, etc., and may include wearable devices such as a watch, a ring, a bracelet, an anklet, a necklace, glasses, contact lenses, or a head-mounted-device (HMD).

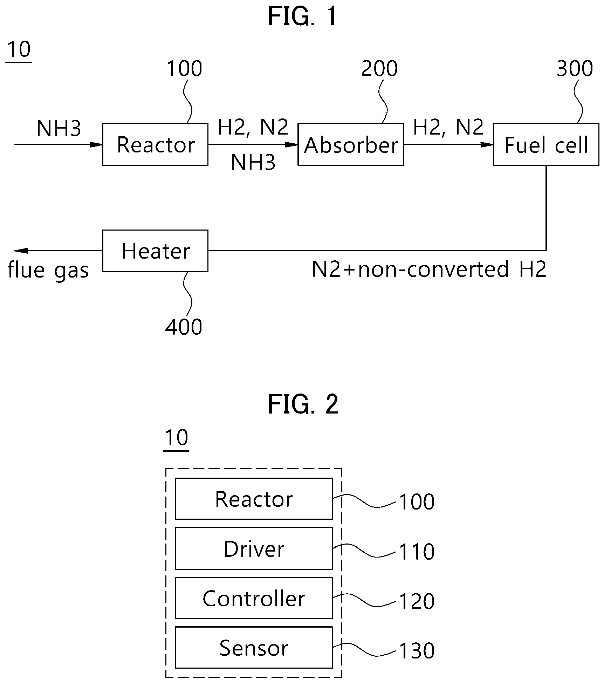

FIG. 1 is a simplified block diagram of a hydrogen cracking apparatus in accordance with some embodiments of the present disclosure.

Referring to FIG. 1, a hydrogen cracking apparatus 10 includes a reactor 100, an absorber 200, a fuel cell 300 and a heater 400. Each of the components/nodes may exchange data with different components/nodes. The components/nodes may be connected to each other through a network. In some embodiments, the hydrogen cracking apparatus 10 may include a dual heating mechanism or a dual heating device as will be described below.

The hydrogen cracking apparatus 10 may receive ammonia (NH₃) through the reactor 100. When an internal temperature of the reactor 100 is temporarily lowered, an ammonia decomposition ratio may be lowered due to catalyst deactivation or performance degradation in the reactor 100. Accordingly, an amount of a residual ammonia in the reactor 100 may be relatively increased.

In some embodiments, such as illustrated in FIG. 1, the reactor 100 may be provided with ammonia and generate hydrogen (H₂), nitrogen (N₂) and ammonia (NH₃) as decomposition products. Thereafter, the hydrogen, nitrogen and ammonia are passed through the absorber 200 wherein the ammonia is absorbed on an absorber bed, while the hydrogen and nitrogen exit the absorber 200 and are fed into the fuel cell 300 where they are used to generate power by the fuel cell 300 which may be supplied to a battery.

In some embodiments, the fuel cell 300 may supply nitrogen and an unconverted (not reacted) hydrogen to the heater 400 to completely combust the unconverted hydrogen before by-products being supplied to the reactor 100. Accordingly, the hydrogen cracking apparatus 10 can re-combust by-products generated due to an imbalance in materials supplied into the reactor 100 through a feedback loop directing the by-products back to the reactor 100. The heat generated by the heater 400 is used to control the internal temperature of the reactor 100 to an adequately high temperature for the ammonia decomposition in the reactor 100. One or more catalysts may also be used in the reactor 100.

A flue gas may be discharged from the heater 400 after the above-described the combustion reaction.

FIG. 2 is a schematic block diagram illustrating components of a hydrogen cracking apparatus in accordance with some embodiments of the present disclosure.

Referring to FIG. 2, the hydrogen cracking apparatus 10 may include the reactor 100, a driver 110, a controller 120 and a sensor 130. An internal structure included in the hydrogen cracking apparatus 10 of FIG. 2 may also include the absorber 200, the fuel cell 300 and the heater 400 as shown in FIG. 1, but the embodiments are not limited thereto.

In some embodiments, a function of the controller 120 may be performed through a separate processing server or a cloud server instead of the controller 120.

In some embodiments, the reactor 100 of the hydrogen cracking apparatus 10 may refer to an equipment such as a cracker.

The reactor 100 may include a flow-meter configured to measure the amount of ammonia that is injected into the reactor 100 and transmit the measured data to the controller 120. For example, the controller 120 may receive an injection amount and an injection time of ammonia from the flow-meter. The flow-meter may measure the amount of ammonia as a function of time, and the data may be transmitted real time to the controller 120.

The controller 120 may receive power consumption information of the battery. The controller 120 may control an operation of the heater by comparing an expected power consumption when driving the heater with an expected temperature increase value when driving the reactor 100.

In some embodiments, the driver 110 may be driven by a power supplied from the battery. For example, the driver 110 may regulate the power supplied to the heater 400 based on signals received by the controller 120, thereby translating the control signals from the controller 120 into a specific power level needed to operate the heater 400. The reactor 100 may generate hydrogen by decomposing ammonia, and the heater 400 may heat the reactor 100 and/or heat hydrogen and ammonia to be supplied into the reactor 100. Thus, the driver 110 may serve as an intermediate controller between the controller 120 and the reactor 100.

For example, the heater 400 may include an electric heater. The heater 400 may penetrate into an inside of the reactor 100, may be connected to the inside, or may surround an outside of the reactor 100. In an embodiment, the heater may have a straight pipe structure penetrating into the inside of the reactor 100. In an embodiment, the heater 400 may have a spiral pipe structure penetrating into the inside of the reactor 100. In an embodiment, the heater 400 may have a spiral pipe structure surrounding the outside of the reactor 100.

The heater 400 may include at least one of the above-described pipe structures. Accordingly, the heater 400 may increase a ramping rate of the reactor 100 to additionally induce a hydrogen reaction.

In some embodiments, the heater 400 may include at least one pipe. The controller 120 may control an operation of the at least one pipe based on a temperature information.

The hydrogen cracking apparatus 10 may further include a storage device (not illustrated). The storage device may store data supporting various functions of the hydrogen cracking apparatus 10 and a program for the operation of the controller 120. The storage device may store input/output data (e.g., an image, a video, etc.). The storage device may store an application program or an application driven in the hydrogen cracking apparatus 10, and data and instructions for the operation of the hydrogen cracking apparatus 10. At least one of the application programs may be downloaded from an external server through a wireless communication.

The storage device may include at least one type of storage media selected from a network attached storage (NAS), a flash memory type, a hard disk type, a solid state disk (SSD) type, a silicon disk drive (SSD) type, a multimedia card micro type, a card type memory (e.g., an SD or XD memory, etc.), a random access memory (RAM), a static random access memory (SRAM), a read-only memory (ROM), an electrically erasable programmable read-only memory (EEPROM), a programmable read-only memory (PROM), a magnetic memory, a magnetic disk and an optical disk. The storage device may include a database separated from the hydrogen cracking apparatus 10, but wire-connected or wireless-connected.

The hydrogen cracking apparatus 10 may further include an output element (not illustrated). The output element may generate an output related to a visual sense, a hearing sense or a touch sense, and may include a display device.

The display device may form a mutual-layered structure with a touch sensor or may be provided as an integral structure with the touch sensor to implement a touch screen. The touch screen may be provided as a user input element that provides an input interface between the hydrogen cracking apparatus 10 and the user, and may provide an output interface between the hydrogen cracking apparatus 10 and the user.

The display device (not illustrated) displays (outputs) information processed in the hydrogen cracking apparatus 10. For example, the display device may display execution screen information of the application program (e.g., the application) driven in the hydrogen cracking apparatus 10, or information of a user interface (UI) or graphic user interface (GUI) according to the execution screen information.

At least one of the elements may be added or deleted corresponding to the performance of the elements shown in FIG. 2. Further, it may be easily understood by those ordinarily skilled in the art that mutual positions of elements may be changed corresponding to the performance or the structure of the hydrogen cracking apparatus 10.

Each element shown in FIG. 2 may refer to a software and/or a hardware such as a field programmable gate array (FPGA) and an application specific integrated circuit (ASIC).

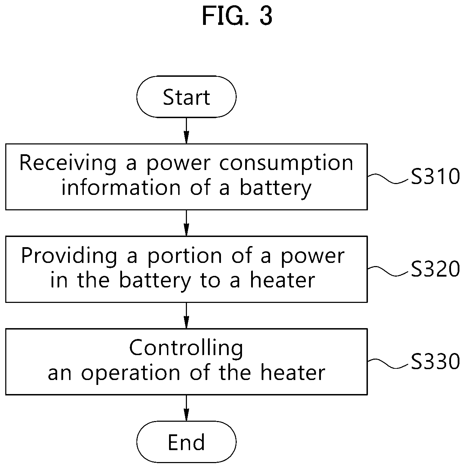

FIG. 3 is a schematic flowchart of a hydrogen cracking method in accordance with some embodiments of the present disclosure.

In an operation of S310, a controller (e.g., the controller 120 of FIG. 2) may receive power consumption information of the battery. The controller 120 may check the power consumption information consumed and may increase or decrease hydrogen supply to the fuel cell 300 by decomposing a predetermined amount of ammonia in the reactor 100 of the hydrogen cracking apparatus 10 of FIG. 1.

In an embodiment, the controller 120 may check the power consumption information of the battery for controlling the amount of ammonia from a storage device that is fed to the reactor 100. In an embodiment, the controller 120 may check the power consumption information of the battery from a battery management system (BMS) capable of checking a life-span of the battery, a usage period of the battery, a real-time power consumption ratio of the battery, etc.

In an operation of S320, the controller 120 may provide a portion of a power in the battery to a heater. The controller 120 may check an expected power consumption amount of the heater when driving the heater (e.g., the heater 400 of FIG. 1). The controller 120 may check an expected temperature increase value when driving a reactor (e.g., the reactor 100 of FIG. 1). The controller 120 may provide a portion of the power in the battery to which the power is supplied through a fuel cell (e.g., the fuel cell 300 of FIG. 1) to the heater.

In an embodiment, the controller 120 may provide a portion of the power supplied from the battery to the hydrogen cracking apparatus to the heater, and may control an operation of the heater in consideration of the state of the battery and the internal temperature of the reactor.

In an operation of S330, the controller 120 may control the operation of the heater based on the power consumption information of the battery and the internal temperature information of the reactor collected through a sensor (e.g., the sensor 130 of FIG. 2). For example, the controller 120 may calculate an expected power consumption of the heater and an expected temperature increase value of the reactor in a load follow state of the hydrogen cracking apparatus. Accordingly, the controller 120 may determine whether to drive the heater, an operating intensity of the heater, etc., in consideration of a reaction efficiency expected by a temperature increase of the reactor.

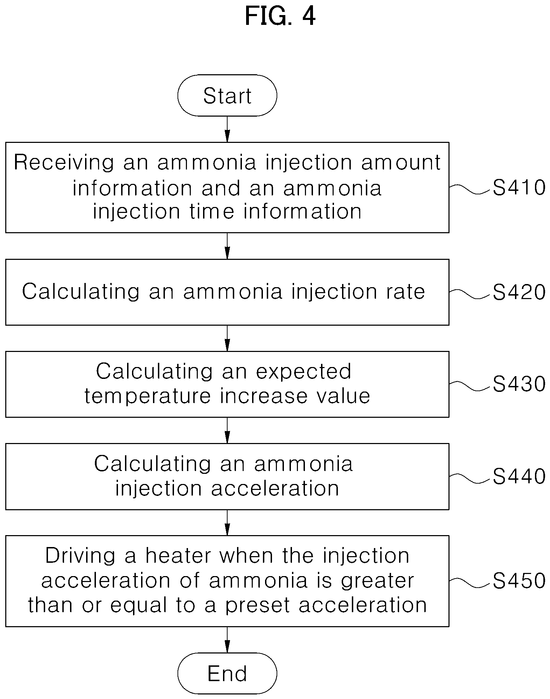

FIG. 4 is a schematic flowchart for describing driving a heater in a hydrogen cracking method in accordance with some embodiments of the present disclosure.

Referring to FIG. 4, in an operation of S410, the controller 120 may receive information on an injection amount and an injection time of ammonia. For example, the controller 120 may receive the injection amount information and the injection time information of ammonia from a flow-meter that senses the ammonia injection amount. The heater 400 may thus be controlled through the information related to the ammonia amount injected into the reactor and the time of the injection.

In an operation of S420, the controller 120 may calculate an injection rate of ammonia. For example, the controller 120 may calculate the injection rate of the ammonia based on information on the injection amount and the injection time of ammonia received in the operation of S410.

In an operation of S430, the controller 120 may calculate an expected temperature increase value of the reactor based on the injection rate of ammonia. For example, the controller 120 may calculate the expected temperature increase value when the reactor is driven using the injection rate of ammonia into the reactor. For example, the controller 120 may perform the calculation based on a stored information on experimental values for the expected temperature increase value corresponding to the injection rate of ammonia.

In an operation of S440, the controller 120 may calculate an injection acceleration of ammonia. For example, the controller 120 may calculate the acceleration based on the injection rate of ammonia.

In an operation of S450, the controller 120 may drive the heater 400 when the injection acceleration of ammonia is greater than or equal to a predetermined acceleration. For example, when the acceleration calculated from the injection rate is greater than or equal to the predetermined acceleration, the controller 120 may immediately operate the heater 400 to increase the internal temperature of the reactor 100.

The controller 120 controls the operation of the heater 400 by controlling a reference conversion ratio within a range in which the operation of the heater is beneficial in terms of energy efficiency based on a comparison value between the expected temperature increase value and the expected power consumption of the heater. For example, information on the reference conversion ratio and the predetermined acceleration may be stored in the storage device. For example, the reference conversion ratio may be similar to a reaction efficiency.

The controller 120 may control the operation of the heater based on information on the reference conversion ratio corresponding to an experimental value and the predetermined acceleration. Accordingly, an operation of the heater may be controlled by the comparison of a gain generated by the expected temperature increase value of the reactor and the power consumption by the operation of the heater in real time.

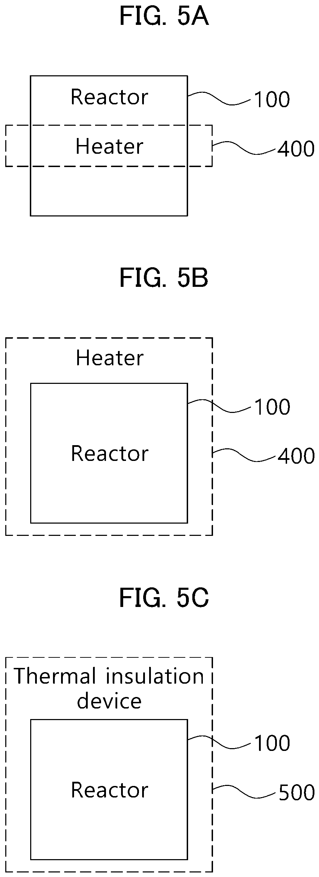

FIGS. 5A to 5C are schematic block diagrams illustrating a heater and a thermal insulation device of a hydrogen cracking apparatus in accordance with some embodiments of the present disclosure.

Referring to FIG. 5A, the hydrogen cracking apparatus 10 may include the heater 400 that passes through the reactor 100. The heater 400 may heat the reactor 100 while passing through the inside of the reactor 100 in a pipe form. Although the heater 400 is illustrated as having a single pipe in FIG. 5A, the heater 400 may include a plurality of pipes. The heater 400 may have a straight pipe structure penetrating the inside of the reactor 100, a spiral pipe structure penetrating the inside of the reactor, or a structure in which a straight pipe and a spiral pipe are mixed.

In some embodiments, the controller (e.g., the controller 120 in FIG. 2) may control each operation of at least one pipe included in the heater 400. In an embodiment, a temperature information of a first portion and a temperature information of a second information in the reactor 100 may be checked. The controller 120 may differently control the pipe of the heater 400 adjacent to the first portion and the pipe of the heater 400 adj acent to the second portion. The controller 120 may individually control the heater 400 adjacent to each portion in consideration of a reaction efficiency according to a temperature of each portion in the reactor 100.

Referring to FIG. 5B, the hydrogen cracking apparatus 10 may include the heater 400 surrounding the outside of the reactor 100. For example, the heater 400 may have a spiral pipe structure surrounding the outside of the reactor, a cover structure surrounding the outside of the reactor or a structure in which a spiral pipe and a cover structure are mixed. A structure of the heater 400 may be appropriately changed in consideration of energy efficiency improvement of the hydrogen cracking apparatus as described above.

Referring to FIG. 5C, the hydrogen cracking apparatus 10 may include a thermal insulation device 500 surrounding the outside of the reactor 100. The thermal insulation device 500 performs a warming function of the reactor 100, and includes a thermal insulative material. Operational efficiency of the reactor 100 of the hydrogen cracking apparatus 10 may be improved through the thermal insulation device 500.

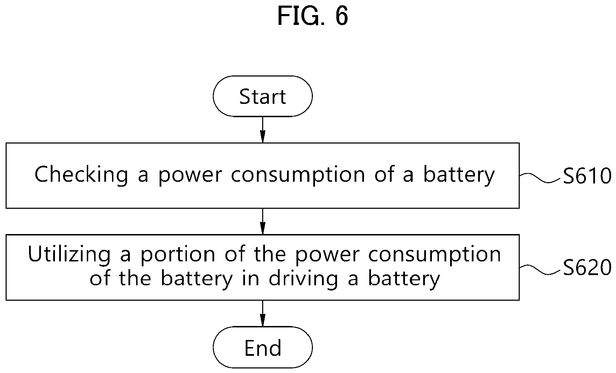

FIG. 6 is a schematic flowchart for describing a battery power utilization in a hydrogen cracking apparatus in accordance with some embodiments of the present disclosure.

Referring to FIG. 6, in an operation of S610, the controller 120 may check the power consumption of the battery. The heater (e.g., the heater 400 of FIG. 1) may be structurally adj acent to the battery. The controller 120 may check the power consumption of the battery in real time, and may utilize a portion of the power consumption of the battery to drive another device.

In an operation of S620, the controller 120 may utilize a portion of the power consumption of the battery to drive the heater. For example, the controller 120 may utilize a portion of the power consumption of the battery based on an expected power consumption when driving the heater.

In an embodiment, the controller 120 may utilize a heat generated from the battery by the heater adjacent to the battery. Additionally, the controller 120 may optimize the reaction efficiency by using a portion of the power consumption of the battery to drive the heater.

The driving of the heater may be performed through a calculation to satisfy a preset ratio of the power consumption of the battery and the expected temperature increase value of the reactor by the heater. That is, the controller 120 may utilize both a structural aspect according to an arrangement of the battery and the heater and an aspect of energy distribution that utilizes a portion of the power consumption of the battery.

In some embodiments, the hydrogen cracking apparatus 10 may further include an ammonia injector for injecting ammonia into the reactor. In an embodiment, the heater is placed around the ammonia injector to heat ammonia injected into the reactor before an injection. The heater may include a plurality of pipes disposed to be adjacent to the ammonia injector.

The controller 120 may heat the ammonia before injecting the ammonia, thereby increasing the reaction efficiency in the reactor. Thus, the internal temperature of the reactor may be increased by the heater and a temperature decrease in the reactor may be prevented by pre-heating ammonia corresponding to a reactant. Therefore, the temperature of the reactor may be directly increased through the heater, thereby increasing an ammonia decomposition ratio. Further, the amount of the residual ammonia may be reduced by maintaining the internal temperature of the reactor at a predetermined temperature.

In some embodiments, the disclosed embodiments may be implemented in the form of a recording medium storing instructions executable by a computer. The instructions may be stored in the form of a program code, and a program module may be generated by a processor to perform operations of the disclosed embodiments. The recording medium may be implemented in a computer-readable form.

The computer-readable recording medium includes all types of recording media in which instructions that may be read by a computer are stored. For example, the recording medium may include a read only memory (ROM), a random access memory (RAM), a magnetic tape, a magnetic disk, a flash memory, an optical data storage device, etc.

## Claims

1. A hydrogen cracking apparatus (10) comprising:
a driver (110) operated by power supplied from a battery;
a reactor (100) that decomposes ammonia to generate hydrogen;
a heater (400) for heating the reactor (100);
a fuel cell (300) reacting hydrogen to generate power and supply at least part of the generated power to the battery;
a sensor (130) measuring internal temperature information of the reactor (100); and
a controller (120) receiving the internal temperature information of the reactor (100) transmitted by the sensor (130),
wherein the controller (120) is configured to receive power consumption information of the battery, and to control an operation of the heater (400) by comparing an expected power consumption expected when driving the heater (400) and an expected temperature increase value expected when driving the reactor (100).

2. The hydrogen cracking apparatus (10) of claim 1, wherein the controller (120) is configured to provide a portion of the power in the battery to the heater (400), and to control an operation of the heater (400) based on power consumption information of the battery and the temperature information.

3. The hydrogen cracking apparatus (10) of any one of claims 1 and 2, wherein the heater (400) includes at least one pipe, and the controller (120) is configured to control an operation of the heater (400) including the at least one pipe based on the temperature information.

4. The hydrogen cracking apparatus (10) of any one of claims 1 to 3, wherein the reactor (100) includes a flow-meter that senses an amount of ammonia injected into the reactor (100),
wherein the controller (120) is configured to:
receive ammonia injection amount information and ammonia injection time information from the flow-meter,
calculate an injection rate of ammonia based on the ammonia injection amount information and the ammonia injection time information, and
calculate the expected temperature increase value based on the injection rate of ammonia.

5. The hydrogen cracking apparatus (10) of claim 4, wherein the controller (120) calculates an injection acceleration of ammonia based on the injection rate of ammonia, and determines to drive the heater (400) when the injection acceleration of ammonia is greater than or equal to a preset acceleration.

6. The hydrogen cracking apparatus (10) of any one of claims 1 to 5, wherein the heater (400) includes at least one structure of a straight pipe structure penetrating an inside of the reactor (100), a spiral pipe structure penetrating the inside of the reactor (100), and a spiral pipe structure surrounding an outside of the reactor (100).

7. The hydrogen cracking apparatus (10) of any one of claims 1 to 6, further comprising an ammonia injector for injecting ammonia into the reactor (100),
wherein the heater (400) is disposed adjacent to the ammonia injector and is configured to heat ammonia before being injected into the reactor (100).

8. The hydrogen cracking apparatus (10) of any one of claims 1 to 7, wherein the heater (400) is adjacent to the battery, and
the controller (120) calculates by using a portion of a power consumption of the battery as the expected power consumption expected when driving the heater (400).

9. The hydrogen cracking apparatus (10) of any one of claims 1 to 8, further comprising a thermal insulation device (500) surrounding an outside of the reactor (100) with a thermal insulation material.

10. A hydrogen cracking method comprising:
receiving temperature information collected from a sensor (130) that measures an internal temperature of a reactor (100) for decomposing ammonia to generate hydrogen;
receiving power consumption information of a battery; and
controlling an operation of a heater (400) by comparing an expected power consumption expected when driving the heater (400) and an expected temperature increase value expected when driving the reactor (100).

11. An energy generation system comprising:
a reactor (100) that produces hydrogen by decomposing an ammonia feed;
a fuel cell (300) configured to use the hydrogen to generate power;
a battery for storing the generated power;
a heater (400) for heating the reactor (100); and
a temperature control system configured to control an internal temperature of the reactor (100) by controlling an operation of the heater (400), wherein the heater (400) and the temperature control system use power supplied by the battery.
